# EUROPEAN PATENT APPLICATION

(11) **EP 4 553 970 A2**
(43) Date of publication of application: **14.05.2025**
(21) Application number: 25166253.2
(22) Date of filing: 27.02.2023
(51) Int. Cl.: H01M 50/148

(54) **LID BODY, LID BODY UNIT, ELECTRIC POWER STORAGE DEVICE, METHOD FOR MANUFACTURING LID BODY UNIT, AND METHOD FOR MANUFACTURING ELECTRIC POWER STORAGE DEVICE**

(30) Priority: 26.02.2022 JP 2022028727; 26.02.2022 JP 2022028728
(62) Divisional of application: 23760186.9
(71) Applicant: Dai Nippon Printing Co., Ltd., Tokyo 162-8001 (JP)
(72) Inventor: SASAKI, Miho, Tokyo 162-8001 (JP); SAITOU, Atsushi, Tokyo 162-8001 (JP); AKUTSU, Koki, Tokyo 162-8001 (JP)
(74) Representative: Müller-Boré & Partner Patentanwälte PartG mbB

(57) **Abstract**

A lid that is used for an electrical storage device. The electrical storage device includes: an electrode assembly; an electrode terminal electrically connected to the electrode assembly; and an exterior film wound around the electrode assembly so as to have an opening. The lid is disposed in the opening, and includes a thick portion joined to the exterior film, and a thin portion

## Description

### Technical Field

The present invention relates to a lid, a lid unit, an electrical storage device, a method for manufacturing a lid unit, and a method for manufacturing an electrical storage device.

### Background Art

PTL 1 discloses an all-solid-state battery as an example of an electrical storage device. The all-solid-state battery includes an electrode assembly, an electrode terminal, and an outer packaging that seals the electrode assembly. The outer packaging includes an exterior film wound around the electrode assembly so as to have an opening, and a lid disposed at the opening. One end part of the electrode terminal is electrically connected to the electrode assembly. The other end part of the electrode terminal is exposed to the outside of the lid. The electrode terminal extends through the lid.

### Citation List

### Patent Literature

PTL 1: Japanese Patent Laid-open Publication No. 2019-153504

### Summary of Invention

### Technical Problem

As a method for making the electrode terminal extend through the lid in the electrical storage device, for example, insert molding of the lid may be performed on the electrode terminal disposed in a mold. However, the electrode terminal is smaller in size as compared to the lid, and therefore difficult to accurately dispose at a predetermined location in the mold. Since the electrode terminal is light in weight, the electrode terminal may shift in location with respect to the mold when the mold is filled with a resin. Therefore, it is difficult to dispose the electrode terminal at a desired location with respect to the lid.

An object of the present invention is to provide a lid in which an electrode terminal can be suitably disposed at a desired location, a lid unit including the lid, an electrical storage device, a method for manufacturing a lid unit, and a method for manufacturing an electrical storage device.

### Solution to Problem

A lid according to a first aspect of the present invention is a lid that is used for an electrical storage device, in which the electrical storage device includes an electrode assembly, an electrode terminal electrically connected to the electrode assembly, and an exterior film wound around the electrode assembly so as to have an opening, and the lid is disposed in the opening, and includes a first part and a second part which sandwich the electrode terminal so as to enable input and output of electrical power through the electrode terminal.

A lid according to a second aspect of the present invention is a lid that is used for an electrical storage device, in which the electrical storage device includes an electrode assembly, an electrode terminal electrically connected to the electrode assembly, and an exterior film wound around the electrode assembly so as to have an opening, and the lid is disposed in the opening, and the lid and the electrode terminal are joined by at least one selected from ultrasonic sealing, high-frequency sealing, heat sealing, heat plate welding, and an adhesive.

A lid according to a third aspect of the present invention is the lid according to the second aspect, including a thick portion joined to the exterior film, and a thin portion connected to the thick portion and joined to the electrode terminal.

A lid according to a fourth aspect of the present invention is a lid that is used for an electrical storage device, in which the electrical storage device includes an electrode assembly, an electrode terminal electrically connected to the electrode assembly, and an exterior film wound around the electrode assembly so as to have an opening, and the lid is disposed in the opening, and includes a thick portion joined to the exterior film, and a thin portion connected to the thick portion and joined to the electrode terminal.

A lid according to a fifth aspect of the present invention is the lid according to any one of the second to fourth aspects, in which the lid includes a first part and a second part which sandwich the electrode terminal so as to enable input and output of electrical power through the electrode terminal.

A lid according to a sixth aspect of the present invention is the lid according to the first or fifth aspect, in which at least one of the first part and the second part includes a concave portion housing the electrode terminal.

A lid according to a seventh aspect of the present invention is the lid according to the first, fifth or sixth aspect, in which the first part and the second part include a positioning portion for use in sandwiching the electrode terminal.

A lid according to an eighth aspect of the present invention is the lid according to the seventh aspect, in which the positioning portion includes a convex portion formed on one of the first part and the second part, and a concave portion which is formed on the other one of the first part and the second part and in which the convex portion is inserted.

A lid according to a ninth aspect of the present invention is the lid according to the first aspect or any one of the fifth to eighth aspects, further including a connecting portion connecting the first part and the second part, in which one of the first part and the second part is capable of being opened or closed to the other through the connecting portion.

A lid according to a tenth aspect of the present invention is the lid according to the first aspect or any one of the fifth to ninth aspects, further including a joining material which is disposed between the electrode terminal and at least one of the first part and the second part, and is joined to a metal and a resin.

A lid according to an eleventh aspect of the present invention is the lid according to the tenth aspect, in which the joining material includes at least one of a film, a resin molded product, and a membrane-like material.

A lid according to a twelfth aspect of the present invention is the lid according to the first aspect or any one of the fifth to eleventh aspects, in which the first part and the second part each have an exposed surface exposed to the outside of the electrical storage device, a barrier film is joined to at least a part of the exposed surface, and the barrier film has at least one of a gas barrier property and a water vapor barrier property.

A lid according to a thirteenth aspect of the present invention is the lid according to the first aspect, in which at least one of the first part and the second part includes a thick portion joined to the exterior film, and a thin portion connected to the thick portion and joined to the electrode terminal.

A lid according to a fourteenth aspect of the present invention is the lid according to the first aspect, in which at least one of the first part and the second part, and the electrode terminal are joined by at least one selected from ultrasonic sealing, high-frequency sealing, heat sealing, heat plate welding, and an adhesive.

A lid unit according to a fifteenth aspect of the present invention includes the lid according to the first aspect or any one of the fifth to fourteenth aspects, and the electrode terminal sandwiched between the first part and the second part.

A lid unit according to a sixteenth aspect of the present invention includes the lid according to any one of the second to fifth aspects, and the electrode terminal joined to the lid.

An electrical storage device according to a seventeenth aspect of the present invention includes the lid according to any one of the first to fourteenth aspects.

A method for manufacturing a lid unit according to an eighteenth aspect of the present invention is a method for manufacturing the lid unit according to the fifteenth aspect, the method including the steps of: sandwiching the electrode terminal between the first part and the second part so as to enable input and output of electrical power through the electrode terminal; and joining the first part and the second part to the electrode terminal.

A method for manufacturing a lid unit according to a nineteenth aspect of the present invention is a method for manufacturing the lid unit according to the sixteenth aspect, the method including a step of joining the lid and the electrode terminal.

A method for manufacturing an electrical storage device according according to a twentieth aspect of the present invention is a method for manufacturing an electrical storage device including an electrode assembly, an electrode terminal electrically connected to the electrode assembly, an exterior film wound around the electrode assembly so as to have an opening, and a lid disposed in the opening, the lid includes a first part and a second part, and the method for manufacturing an electrical storage device includes the steps of: sandwiching the electrode terminal between the first part and the second part so as to enable input and output of electrical power through the electrode terminal, and joining the first part and the second part to the electrode terminal.

A method for manufacturing an electrical storage device according to twenty-first aspect of the present invention is a method for manufacturing an electrical storage device including an electrode assembly, an electrode terminal electrically connected to the electrode assembly, an exterior film wound around the electrode assembly so as to have an opening, and a lid disposed in the opening, the method including a step of joining the lid and the electrode terminal by at least one selected from ultrasonic sealing, high-frequency sealing, heat sealing, heat plate welding, and an adhesive.

A method for manufacturing an electrical storage device according to a twenty-second aspect of the present invention is a method for manufacturing an electrical storage device including an electrode assembly, an electrode terminal electrically connected to the electrode assembly, an exterior film wound around the electrode assembly so as to have an opening, and a lid disposed in the opening, the lid including a thick portion joined to the exterior film, and a thin portion connected to the thick portion and joined to the electrode terminal, the method including a step of joining the thin portion and the electrode terminal.

### Advantageous Effect of Invention

According to the lid, the lid unit, the electrical storage device, the method for manufacturing a lid unit, and a method for manufacturing an electrical storage device according to the present invention, an electrode terminal can be suitably disposed at a desired location.

### Brief Description of Drawings

[Fig. 1] Fig. 1 is a perspective view of an electrical storage device of a first embodiment.
[Fig. 2] Fig. 2 is a sectional view showing a layer configuration of an exterior film of the electrical storage device of Fig. 1.
[Fig. 3] Fig. 3 is a front view of a lid and an electrode terminal of the electrical storage device of Fig. 1.
[Fig. 4] Fig. 4 is a side view of the lid and the electrode terminal of Fig. 3.
[Fig. 5] Fig. 5 is a flowchart showing an example of a method for manufacturing the electrical storage device of Fig. 1.
[Fig. 6] Fig. 6 is a flowchart showing another example of a method for manufacturing the electrical storage device of Fig. 1.
[Fig. 7] Fig. 7 is a side view of a lid of an electrical storage device of a second embodiment.
[Fig. 8] Fig. 8 is an exploded view of a lid of an electrical storage device of a third embodiment in front view.
[Fig. 9] Fig. 9 is a front view of a lid of an electrical storage device of a fourth embodiment with a second part opened to a first part.
[Fig. 10] Fig. 10 is an exploded view of a lid of an electrical storage device of a fifth embodiment in front view.
[Fig. 11] Fig. 11 is an exploded view of a lid of an electrical storage device of a sixth embodiment in front view.
[Fig. 12] Fig. 12 is a front view of a lid of an electrical storage device of a seventh embodiment.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. First Embodiment]

### <1-1. Configuration of electrical storage device>

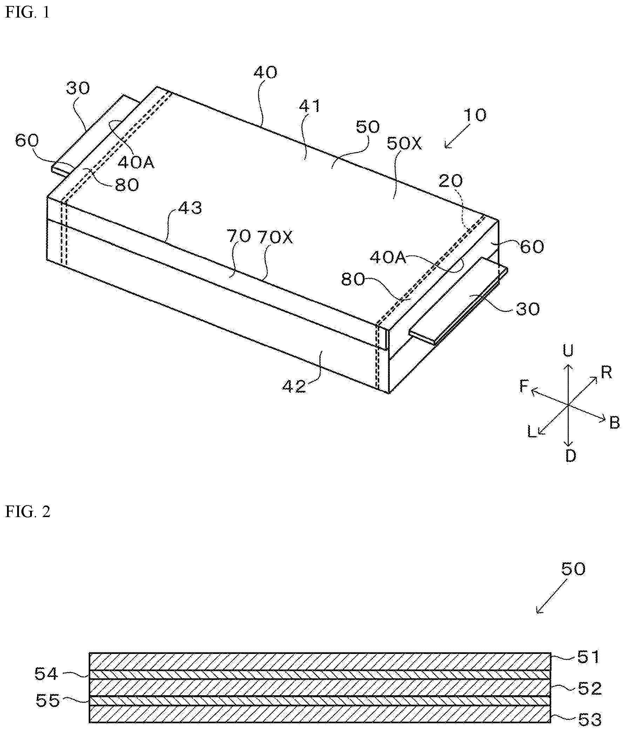

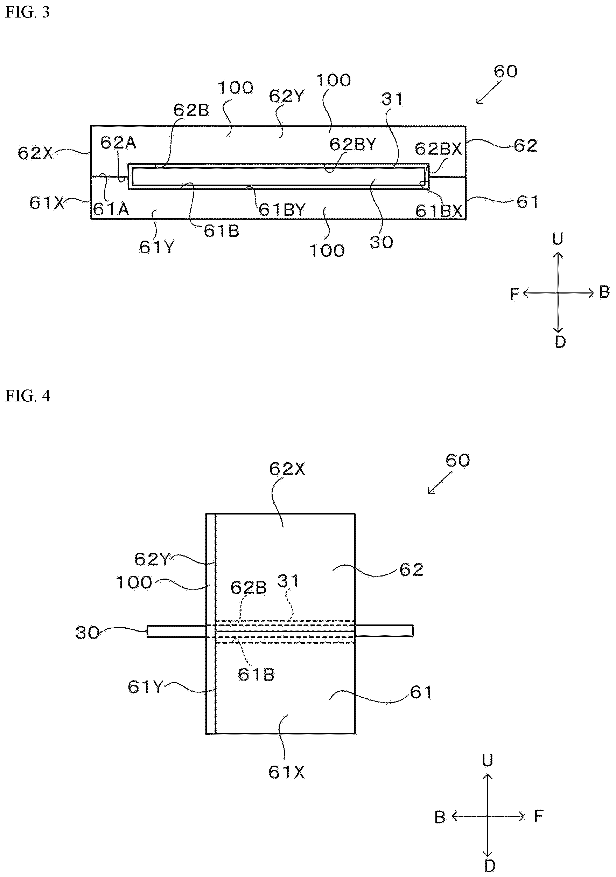

Fig. 1 is a plan view schematically showing an electrical storage device 10 of a first embodiment. Fig. 2 is a sectional view showing a layer configuration of an exterior film 50 of the electrical storage device 10 of Fig. 1. Fig. 3 is a front view of a lid 60 and an electrode terminal 30 of the electrical storage device 10 of Fig. 1. Fig. 4 is a side view of the lid 60 and the electrode terminal 30 of Fig. 3. In Fig. 1, the direction along arrow UD indicates a thickness direction of the electrical storage device 10, the direction along arrow LR indicates a width direction of the electrical storage device 10, and the direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, electrodes (a positive electrode and a negative electrode) forming an electrical storage member of a lithium ion battery, a capacitor or an all-solid-state battery. **In** the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

**In** the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40, for example. The electrode terminal 30 is only required to enable input and output of electrical power in the electrode assembly 20, and is not required to protrude from the outer packaging 40, for example.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 is wound around the electrode assembly 20 so as to have an opening 40A, and the lid 60 is disposed on the side of the electrode assembly 20 so as to close the opening 40A.

It is preferable that an adhesive film 31 (see Fig. 3) is joined to the electrode terminal 30 from the viewpoint of suitable bonding to the lid 60. The adhesive film 31 can be arbitrarily selected as long as it is a film capable of bonding the electrode terminal 30 formed of a metal and the lid 60 formed of a resin. For the adhesive film 31, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive film 31 can be a film having a single layer or two or more layers of any of the above-mentioned resins. In the present embodiment, the adhesive film 31 is bonded to substantially the whole of a portion of the electrode terminal 30 which is covered with the lid 60. Hereinafter, in the electrode terminal 30 to which the adhesive film 31 is joined, the thickness of the electrode terminal 30 with the inclusion of the adhesive film 31 may be referred to as an overall thickness of the electrode terminal 30.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. When the electrical storage device 10 is an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

As shown in Fig. 2, the exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 20 to 150 µm.

The barrier layer 52 is joined to, for example, the base material layer 51 with an adhesive layer 54 interposed therebetween. The barrier layer 52 in the exterior film 50 is made from, for example, an aluminum foil from the viewpoint of moisture resistance, processability such as extensibility, and cost. The aluminum foil preferably contains iron from the viewpoint of suitability for packaging in packaging of the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer 52 may include a metal foil having barrier properties, a deposited film, and a resin layer. Examples of the metal foil include an aluminum alloys, stainless steel, titanium steel, and steel plates.

From the viewpoint of barrier properties, pinhole resistance and suitability for packaging, the thickness of the barrier layer 52 is, for example, preferably 15 to 100 µm, more preferably 30 to 80 µm. When the thickness of the barrier layer 52 is 15 µm or more, the exterior film 50 is less likely to be broken even if stress is applied by packaging processing. When the thickness of the barrier layer 52 is 100 µm or less, an increase in mass of the exterior film 50 can be reduced, and a decrease in weight energy density of the electrical storage device 10 can be suppressed.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

In the present embodiment, with the exterior film 50 wound around the electrode assembly 20 so as to have the opening 40A, surfaces of the exterior film 50 which face each other (heat-sealable resin layer 53) are heat-sealed to form a first sealed portion 70. In the present embodiment, the first sealed portion 70 extends in a longitudinal direction of the outer packaging 40. In the outer packaging 40, a location at which the first sealed portion 70 is formed can be arbitrarily selected. In the present embodiment, a root 70X of the first sealed portion 70 is located on a side 43 of a boundary between the first surface 41 and the second surface 42 of the outer packaging 40. The first surface 41 has a larger area over the second surface 42. The root 70X of the first sealed portion 70 may be located on an arbitrary surface of the outer packaging 40. In the present embodiment, for example, the first sealed portion 70 is folded toward the second surface 42 of the outer packaging 40. The first sealed portion 70 may protrude outward with respect to the electrode assembly 20 in plan view, or may be folded toward the first surface 41.

The lid 60 generally has, for example, a cuboid shape, and is made from, a resin material. The lid 60 may be formed by, for example, cold-molding the exterior film 50. Examples of the material for forming the lid 60 include polyester-based resins such as polyethylene terephthalate-based resins and polybutylene terephthalate-based resins, polyolefin-based resins such as polyethylene-based resins, fluorine-based resins and polypropylene-based resins, cyclic polyolefin-based resins, or acid-modified polyolefin-based resins obtained by graft-modifying the polyolefin-based resin with an acid such as maleic anhydride. From the viewpoint of suitably heat-sealing the lid 60 and the exterior film 50, the main components of materials for forming the lid 60 and materials for forming the heat-sealable resin layer 53 of the exterior film 50 are preferably the same. In the present embodiment, examples of the main component of the material for forming the lid 60 and the material for forming the heat-sealable resin layer 53 include polyolefin-based resins such as polyethylene-based resins and polypropylene-based resins, and acid-modified polyolefin-based resins obtained by graft-modifying the polyolefin-based resin with an acid such as maleic anhydride. Note that the main component refers to, for example, a material that accounts for 50% or more of the materials contained in a constituent element.

In the present embodiment, the lid 60 has the divided first part 61 and second part 62 for suitably disposing the electrode terminal 30 at a desired location. The lid 60 may include three or more parts. It is preferable that the first part 61 and the second part 62 are joined to the electrode terminal 30 by at least one selected from ultrasonic sealing, high-frequency sealing, heat sealing, heat plate welding, and an adhesive, and with the adhesive film 31 interposed therebetween if necessary. Since the electrode terminal 30 and the lid 60 are firmly joined, the electrode terminal 30 can be suitably held by the lid 60. When the adhesive film 31 is not joined to the electrode terminal 30, it is preferable that the first part 61 and the second part 62 are joined to the electrode terminal 30 by an adhesive. Examples of the adhesive include an adhesive for use in hot melting or dry lamination.

The shape of the first part 61 and the shape of the second part 62 can be arbitrarily selected as long as the electrode terminal 30 can be sandwiched so as to enable input and output of electrical power through the electrode terminal 30. It is preferable that the first part 61 and the second part 62 are substantially identical in shape. In the present embodiment, the first part 61 and the second part 62 are substantially identical in shape.

The first part 61 is disposed on the lower side with respect to the second part 62. The first part 61 includes a part joining portion 61A joined to the second part 62, and a concave portion 61B protruding downward from the part joining portion 61A. The shape of the concave portion 61B in plan view can be arbitrarily selected as long as a part of the electrode terminal 30 can be housed. In the present embodiment, the shape of the concave portion 61B in plan view is a rectangle. The concave portion 61B has a lateral surface 61BX and a bottom surface 61BY. The adhesive film 31 joined to the electrode terminal 30 is joined to the lateral surface 61BX and the bottom surface 61BY. Since the first part 61 includes the concave portion 61B, the electrode terminal 30 hardly shifts in location with respect to the first part 61. The electrode terminal 30 can be easily disposed with respect to the first part 61.

The second part 62 includes a part joining portion 62A joined to the first part 61, and a concave portion 62B protruding downward from the part joining portion 62A. The shape of the concave portion 62B in plan view can be arbitrarily selected as long as a part of the electrode terminal 30 to which the adhesive film 31 is joined can be housed in the concave portion. In the present embodiment, the shape of the concave portion 62B in plan view is a rectangle. The concave portion 62B has a lateral surface 62BX and a bottom surface 62BY. The adhesive film 31 joined to the electrode terminal 30 is joined to the lateral surface 62BX and the bottom surface 62BY. Since the second part 62 includes the concave portion 62B, the electrode terminal 30 hardly shifts in location with respect to the second part 62. The electrode terminal 30 can be easily disposed with respect to the second part 62.

The depth of the concave portion 61B (height of the lateral surface 61BX) and the depth of the concave portion 62B ( height of the lateral surface 62BX) can be arbitrarily selected as long as the whole of the electrode terminal 30 to which the adhesive film 31 is joined can be housed. In the present embodiment, the depth of the concave portion 61B is substantially half the overall thickness of the electrode terminal 30. The depth of the concave portion 62B is substantially half the overall thickness of the electrode terminal 30 to which the adhesive film 31 is joined. That is, the sum of the depth of the concave portion 61B and the depth of the concave portion 62B is substantially equal to the overall thickness of the electrode terminal 30.

The first part 61 has a seal surface 61X sealed with the exterior film 50 and an exposed surface 61Y exposed to the outside of the electrical storage device 10. The second part 62 has a seal surface 62X sealed with the exterior film 50 and an exposed surface 62Y exposed to the outside of the electrical storage device 10. The seal surfaces 61X and 62X each form a lateral surface of the lid 60. Each of the exposed surfaces 61Y and 62Y is a surface of the lid 60 on a side opposite to a surface facing the electrode assembly 20. It is preferable that a barrier film 100 having at least one of a gas barrier property and a water vapor barrier property is joined to at least a part of the exposed surfaces 61Y and 62Y. In the present embodiment, the barrier film 100 is joined to substantially the whole of the exposed surfaces 61Y and 62Y. As specifications about the barrier film 100, for example, specifications about the exterior film 50 can be applied. When the barrier film 100 includes a heat-sealable resin layer, the heat-sealable resin layer of the barrier film 100 is joined to the exposed surfaces 61Y and 62Y of the lid 60. In another example, the barrier film 100 may be, for example, a vapor deposition film obtained by forming a thin film of a metal such as aluminum, silicon oxide or alumina on a surface of a plastic film such as a polyester, polypropylene or nylon film by a vacuum vapor deposition method. When the barrier film 100 does not include a heat-sealable resin layer, the barrier film 100 and the exposed surfaces 61Y and 62Y of the lid 60 are joined by, for example, an adhesive. The outer line of the barrier film 100 is not required to match the outer line of the exposed surfaces 61Y and 62Y. For example, the barrier film 100 that is too big to fit inside the outer line of the exposed surfaces 61Y and 62Y may be prepared, and joined to the seal surfaces 61X and 62X with the barrier film 100 folded such that portions protruding from the outer line of the exposed surfaces 61Y and 62Y are eliminated. Portions of the barrier film 100 which are joined to the seal surfaces 61X and 62X are joined to the innermost layer of the exterior film 50. In another example, the barrier film 100 may be joined to the outermost layer of the exterior film 50 by, for example, an adhesive with the barrier film 100 folded such that portions protruding from the outer line of the exposed surfaces 61Y and 62Y are eliminated.

When the electrical storage device 10 is a lithium ion battery, gases such as a volatilized organic solvent, carbon monoxide, carbon dioxide, methane, ethane, hydrogen and hydrogen fluoride may be generated by volatilization of an organic solvent as an electrolyte and decomposition of an electrolytic solution. When the electrical storage device 10 is a capacitor, gas may be generated by a chemical reaction in the capacitor. When the electrical storage device 10 is an all-solid-state battery, the electrode assembly 20 may contain a solid electrolyte that can generating gas. For example, when the solid electrolyte is sulfide-based substance, gases of hydrogen sulfide may be generated. When the barrier film 100 has a gas barrier property, leakage of these gases to the outside of the outer packaging 40 is suppressed. When the barrier film 100 has a water vapor barrier property, ingress of moisture in spaces outside the electrical storage device 10 to the inside of the outer packaging 40 is suppressed.

In the present embodiment, a second sealed portion 80 is formed by heat-sealing the heat-sealable resin layer 53 of the exterior film 50 and the seal surfaces 61X and 62X of the lid 60. Hereinafter, the sealing strength between the heat-sealable resin layer 53 of the exterior film 50 and the seal surfaces 61X and 62X of the lid 60 may be referred to as sealing strength of the second sealed portion 80. The sealing strength of the second sealed portion 80 is the sealing strength between the heat-sealable resin layer 53 and the lid 60 in the long-side portion of the seal surfaces 61X and 62X, that is, the seal surfaces 61X and 62X extending in the LR (width) direction in Fig. 1. The exterior film 50 is in the UD (vertical) direction in Fig. 1 with respect to the lid 60, and the sealing strength of the second sealed portion 80 is measured on the basis of a distance of the second sealed portion 80 in the FB (depth) direction. The sealing strength of the second sealed portion 80 of the lid 60 divided into a plurality of parts including long sides and short sides as in the present embodiment is the sealing strength at the long-side portion of the seal surfaces 61X and 62X of the plurality of parts.

From the viewpoint of suitably maintaining the state in which the electrode assembly 20 is sealed with the outer packaging 40, the sealing strength of the second sealed portion 80 is preferably 40 N/15 mm or more, more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 150 N/15 mm or less. The sealing strength of the second sealed portion 80 is preferably in the range of 40 N/15 mm to 150 N/15 mm, 50 N/15 mm to 150 N/15 mm, 60 N/15 mm to 150 N/15 mm, 70 N/15 mm to 150 N/15 mm, or 85 N/15 mm to 150 N/15 mm.

When the lid 60 has a plate shape, the lid 60 is preferably thick enough to suppress deformation of the outer packaging 40 even if electrical storage devices 10 are stacked on top of another. From another point of view, when lid 60 has a plate shape, the seal surfaces 61X and 62X of the lid 60 are preferably thick enough to ensure that the seal surfaces 61X and 62X of the lid 60 and the exterior film 50 can be suitably heat-sealed in formation of the second sealed portion 80. The minimum value of the thickness of the lid 60 is, for example, 1.0 mm, more preferably 3 mm, still more preferably 4 mm. The maximum value of the thickness of the lid 60 is, for example, 10 mm, more preferably 8.0 mm, still more preferably 7.0 mm. The maximum value of the thickness of the lid 60 may be 10 mm or more. The thickness of the material for forming the lid 60 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present embodiment, when the lid 60 is described as having a plate shape, the material for forming the lid 60 does not include a film defined by Japanese Industrial Standard (JIS), Packaging Terminology Standard. The thickness of the lid 60 may vary depending on a portion of the lid 60. When the thickness of the lid 60 varies depending on a portion, the thickness of the thickest portion of the lid 60 is defined as a thickness of the lid 60.

### <1-2. Method for manufacturing electrical storage device>

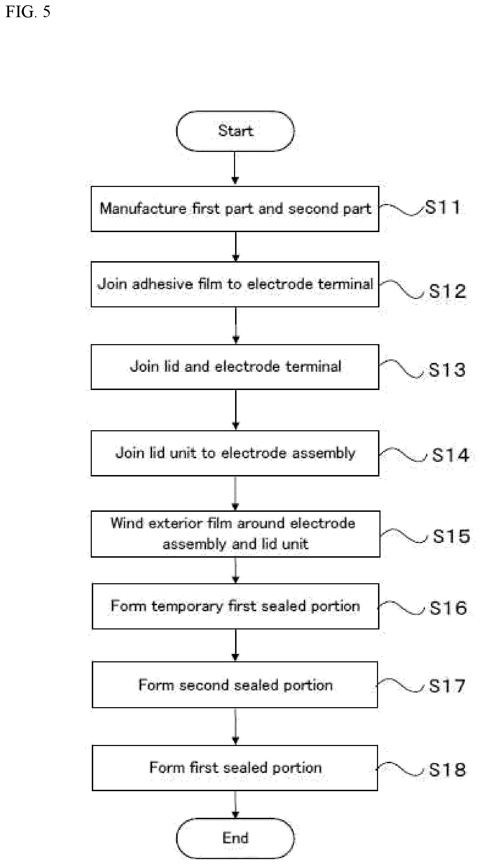

Fig. 5 is a flowchart showing an example of a method for manufacturing the electrical storage device 10. The method for manufacturing the electrical storage device 10 includes, for example, a first step, a second step, a third step, a fourth step, a fifth step, a sixth step, a seventh step and an eighth step. The first to eighth steps are carried out by, for example, an apparatus for manufacturing the electrical storage device 10. In the present embodiment, the term "first to eighth steps" refers to conveniently assigned names of the steps, and does not mean the order of the steps.

In the first step as step S11, the manufacturing apparatus manufactures the first part 61 and the second part 62.

The second step as step S12 is carried out after the first step. In the second step, the manufacturing apparatus joins the adhesive film 31 to the electrode terminal 30. The second step may be carried out before the first step.

The third step as step S13 is carried out after the first step or the second step. In the third step, the manufacturing apparatus sandwiches the electrode terminal 30 between the first part 61 and the second part 62. The manufacturing apparatus joins the first part 61 and second part 62 and the electrode terminal 30 by, for example, at least one selected from ultrasonic sealing, high-frequency sealing, heat sealing, heat plate welding, and an adhesive. By completion of the third step, an article in which the electrode terminal 30 and the lid 60 are joined (hereinafter, referred to as a "lid unit 90") is produced. The first to third steps correspond to a method for manufacturing the lid unit 90.

The fourth step in step S14 is carried out after the third step. In the fourth step, the manufacturing apparatus disposes the lid unit 90 at both end parts of the electrode assembly 20, and electrically connects electrode terminal 30 and the electrode of the electrode assembly 20.

The fifth step as step S15 is carried out after the fourth step. In the fifth step, the manufacturing apparatus winds the exterior film 50 around the electrode assembly 20 and the lid unit 90.

The sixth step as step S16 is carried out after the fifth step. In the fifth step, the manufacturing apparatus heat-seals the opposed heat-sealable resin layers 53 of the exterior film 50 to form a first sealed portion 70, a part of which is an unsealed portion (hereinafter, referred to as a "temporary first sealed portion"). The unsealed portion can be formed by using, for example, a seal bar having a shape such that a part of the sealing bar does not come into contact with the exterior film 50. In another example, the unsealed portion can be formed by interposing a fluororesin film or the like between surfaces (heat-sealable resin layers 53) of the exterior film 50, which face each other. By forming the temporary first sealed portion before formation of the second sealed portion 80, the electrode assembly 20 can be held by the exterior film 50, so that the location of the electrode assembly 20 is unlikely to shift with respect to the exterior film 50. This suppresses generation of wrinkles during formation of the second sealed portion 80.

The seventh step as step S17 is carried out after the sixth step. In the seventh step, the manufacturing apparatus forms the second sealed portion 80 by heat-sealing the exterior film 50 and the seal surfaces 61X and 62X of the lid 60.

The eighth step as step S18 is carried out after the seventh step. In the eighth step, the manufacturing apparatus injects an electrolytic solution from the unsealed portion of the temporary first sealed portion, evacuates the exterior film 50, and then heat-seals the unsealed portion to form the first sealed portion 70. When the electrical storage device 10 is an all-solid-state battery, the step of injecting an electrolytic solution in the eighth step is omitted.

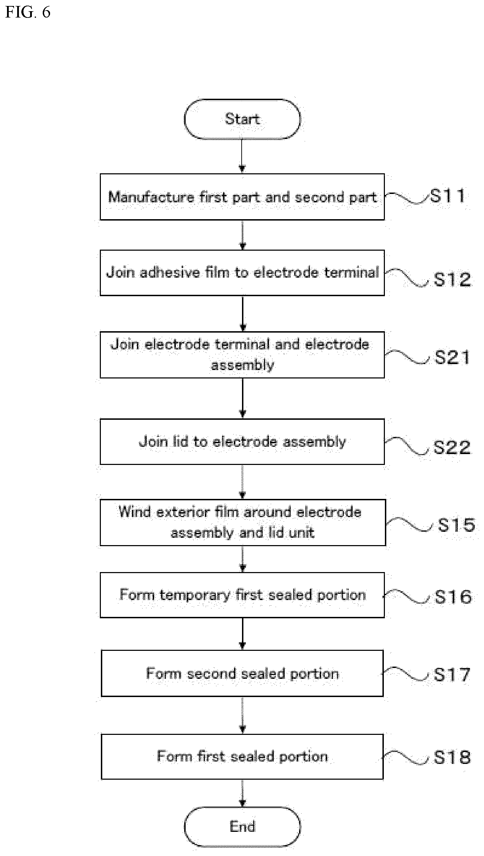

Fig. 6 is a flowchart showing another example of a method for manufacturing the electrical storage device 10. The manufacturing method shown in Fig. 6 is the same as the manufacturing method shown in Fig. 5 except that the ninth step as step S21 is carried out instead of the third step as step S13 and the tenth step as step S22 is carried out instead of the fourth step as step S14 shown in Fig. 5.

In the example shown in Fig. 6, the manufacturing apparatus electrically connects the electrode terminal 30 and the electrode of the electrode assembly 20 in the first step as step S11, or the ninth step as step S21 carried out after the second step as step S12. In the tenth step as step S22 carried out after the ninth step, the manufacturing apparatus sandwiches the electrode terminal 30 between the first part 61 and the second part 62, and joins the first part 61 and the second part 62 to the electrode terminal 30 by, for example, at least one selected from ultrasonic sealing, high-frequency sealing, heat sealing, heat plate welding, and an adhesive. In the example shown in Fig. 6, in the tenth step, the lid 60 may cover, for example, a portion where a current collecting foil of the electrode assembly 20 and the electrode terminal 30 are connected.

### <1-3. Action and effect of electrical storage device>

In the electrical storage device 10, the electrode terminal 30 is sandwiched between the divided first part 61 and second part 62 to form a state in which the electrode terminal 30 is held by the lid 60. This enables the electrode terminal 30 to be suitably disposed at a desired location.

The electrical storage device described in PTL 1 (Japanese Patent Laid-open Publication No. 2019-153504) is not designed with consideration for how to fix the lid and the electrode terminal to each other. Therefore, the electrode terminal may shift in location with respect to the lid.

In the electrical storage device of the present embodiment, the electrode terminal 30 is joined by at least one selected from ultrasonic sealing, high-frequency sealing, heat sealing, heat plate welding, and an adhesive, with the adhesive film 31 interposed therebetween if necessary. Since the electrode terminal 30 and the lid 60 are firmly joined, the electrode terminal 30 can be suitably held by the lid 60.

### [2. Second Embodiment]

An electrical storage device 10 of a second embodiment has the same configuration as in the first embodiment except that a lid 260 is provided. Hereinafter, the lid 260 of the electrical storage device 10 of the second embodiment will be described mainly for portions different from those of the lid 60 of the first embodiment.

### <2-1. Configuration of lid>

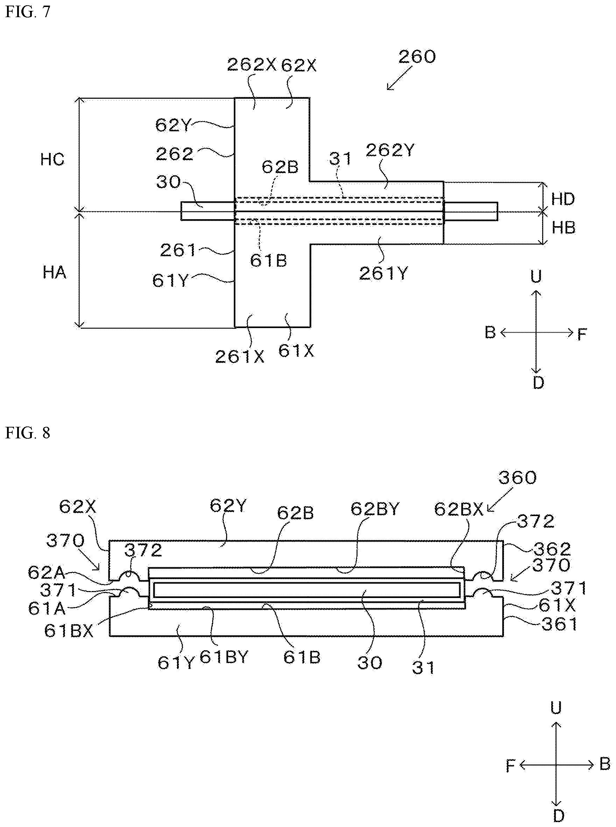

Fig. 7 is a side view of the lid 260. The lid 260 includes a first part 261 and a second part 262. The first part 261 includes a thick portion 261X and a thin portion 261Y. The thick portion 261X has a shape similar to that of the first part 61 in the first embodiment, and has a seal surface 61X that is joined to the exterior film 50. The thin portion 261Y is connected to the thick portion 261X, and is joined to the electrode terminal 30 with the adhesive film 31 interposed therebetween. The thickness HB of the thin portion 261Y is smaller than the thickness HA of the thick portion 261X. A concave portion 61B is formed on the thick portion 261X and the thin portion 261Y. In the present embodiment, the thin portion 261Y is formed at a location closer to the electrode assembly 20 with respect to the thick portion 261X. The thin portion 261Y may be formed at a location farther away from the electrode assembly 20, in other words, on the outer side, with respect to the thick portion 261X.

The second part 262 includes a thick portion 262X and a thin portion 262Y. The thick portion 262X has a shape similar to that of the second part 62 in the second embodiment, and has a seal surface 62X that is joined to the exterior film 50. The thin portion 262Y is connected to the thick portion 262X, and is joined to the electrode terminal 30 with the adhesive film 31 interposed therebetween. The thickness HD of the thin portion 262Y is smaller than the thickness HC of the thick portion 262X. A concave portion 62B is formed on the thick portion 262X and the thin portion 262Y. In the present embodiment, the thin portion 262Y is formed at a location closer to the electrode assembly 20 with respect to the thick portion 262X. The thin portion 262Y may be formed at a location farther away from the electrode assembly 20, in other words, on the outer side, with respect to the thick portion 262X.

### <2-2. Action and effect of electrical storage device>

In the electrical storage device 10 of the second embodiment, the lid 260, which includes the thin portions 261Y and 262Y, thus enables the electrode terminal 30 and the thin portions 261Y and 262Y to be firmly joined by, for example, at least one selected from ultrasonic sealing, high-frequency sealing, heat sealing, and heat plate welding.

### [3. Third Embodiment]

An electrical storage device 10 of a third embodiment has the same configuration as in the first embodiment except that a lid 360 is provided. Hereinafter, the lid 360 of the electrical storage device 10 of the third embodiment will be described mainly for portions different from those of the lid 60 of the first embodiment.

### <3-1. Configuration of lid>

Fig. 8 is an exploded view of the lid 360 in front view. The lid 360 includes a first part 361 and a second part 362. The first part 361 and the second part 362 include a positioning portion 370 for use in sandwiching the electrode terminal 30. The positioning portion 370 includes a convex portion 371 formed on one of the first part 361 and the second part 362, and a concave portion 372 which is formed on the other one of the first part 361 and the second part 362 and in which the convex portion 371 is inserted. In the present embodiment, the convex portion 371 is formed on a part joining portion 61A of the first part 361. In the present embodiment, the concave portion 372 is formed on a part joining portion 62A of the second part 362. The shape of the convex portion 371 can be arbitrarily selected. In the present embodiment, the convex portion 371 is a hemisphere. The shape of the convex portion 371 may be a prism, a pyramid, a cylinder, or a cone. The shape of the concave portion 372 can be arbitrarily selected as long as it enables insertion of the convex portion 371.

### <3-2. Action and effect of electrical storage device>

**In** the electrical storage device 10 of the third embodiment, the lid 360, which includes the positioning portion 370, thus ensures that the third step as step S13 shown in Fig. 5 and the tenth step as step S22 shown in Fig. 6 can be easily carried out.

### [4. Fourth Embodiment]

An electrical storage device 10 of a fourth embodiment has the same configuration as in the first embodiment except that a lid 460 is provided. Hereinafter, the lid 460 of the electrical storage device 10 of the fourth embodiment will be described mainly for portions different from those of the lid 60 of the first embodiment.

### <4-1. Configuration of lid>

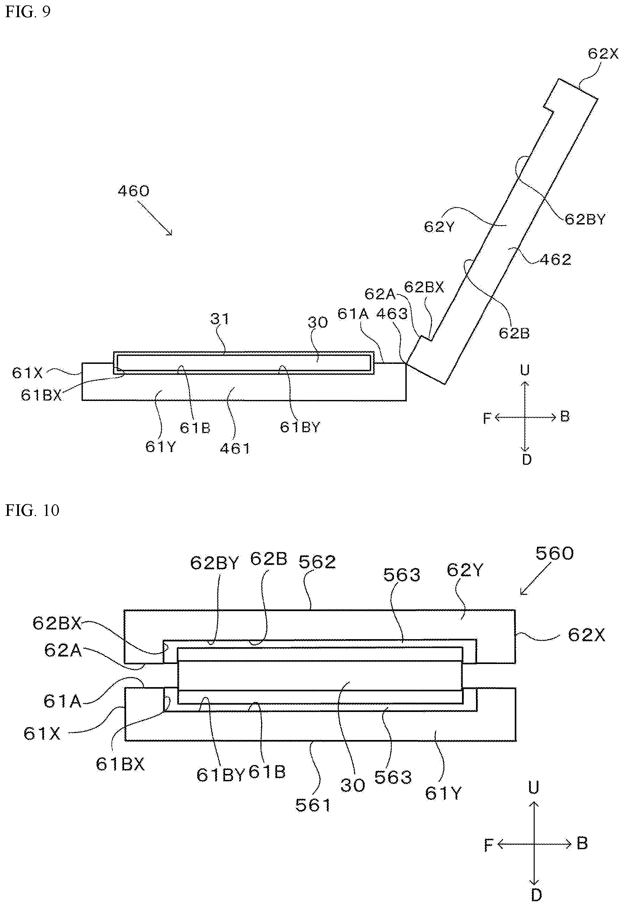

Fig. 9 is a front view of the lid 460 with a second part 462 opened to a first part 461. The lid 460 includes the first part 461, the second part 462, and connecting portion 463 that connects the first part 461 and the second part 462. One of the first part 461 and the second part 462 can be opened or closed to the other through the connecting portion 463. The connecting portion 463 has a hinge-like function. The connecting portion 463 connects the part joining portion 61A of the first part 461 and the part joining portion 62A of the second part 462.

### <4-2. Action and effect of electrical storage device>

In the electrical storage device 10 of the fourth embodiment, the lid 460, which includes the connecting portion 463, thus does not undergo separation of the first part 461 and the second part 462. This enables the lid 460 to be easily managed. The electrode terminal 30 can be sandwiched by closing one of the first part 461 and the second part 462 to the other. Since positioning of one of the first part 461 and the second part 462 to the other can be easily performed, the third step as step S13 shown in Fig. 5 and the tenth step as step S22 shown in Fig. 6 can be easily carried out.

### [5. Fifth Embodiment]

An electrical storage device 10 of a fifth embodiment has the same configuration as in the first embodiment except that a lid 560 is provided. Hereinafter, the lid 560 of the electrical storage device 10 of the fifth embodiment will be described mainly for portions different from those of the lid 60 of the first embodiment.

### <5-1. Configuration of lid>

Fig. 10 is an exploded view of the lid 560 in front view. The lid 560 includes a first part 561, a second part 562, and a joining material 563. The first part 561 is identical in shape to the first part 61. The second part 562 is identical in shape to the second part 62. The joining material 563 joins the electrode terminal 30 formed of a metal and the first part 561 and second part 562 formed of a resin. In the present embodiment, the material used for the joining material 563 may be a heretofore known material as long as it is capable of joining the first part 561 and second part 562 and the electrode terminal 30. The joining material 563 is preferably a resin molded product made from, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. It is preferable that the joining material 563 is joined to the whole of the concave portion 61B of the first part 561 and the whole of the concave portion 62B of the second part 562 as shown in Fig. 10. The joining material 563 may be joined only to a bottom surface 61BY of the concave portion 61B. The joining material 563 may be joined only to a bottom surface 62BY of the concave portion 62B.

### <5-2. Action and effect of electrical storage device>

In the electrical storage device 10 of the fifth embodiment, the lid 560, which includes the joining material 563, thus eliminates the need to join the adhesive film 31 to the electrode terminal 30. Since the second step as step S12 shown in Fig. 5 or 6 can be omitted, the electrical storage device 10 can be easily manufactured.

### [6. Sixth Embodiment]

An electrical storage device 10 of a sixth embodiment has the same configuration as in the fifth embodiment except that a lid 660 is provided. Hereinafter, the lid 660 of the electrical storage device 10 of the sixth embodiment will be described mainly for portions different from those of the lid 560 of the fifth embodiment.

### <6-1. Configuration of lid>

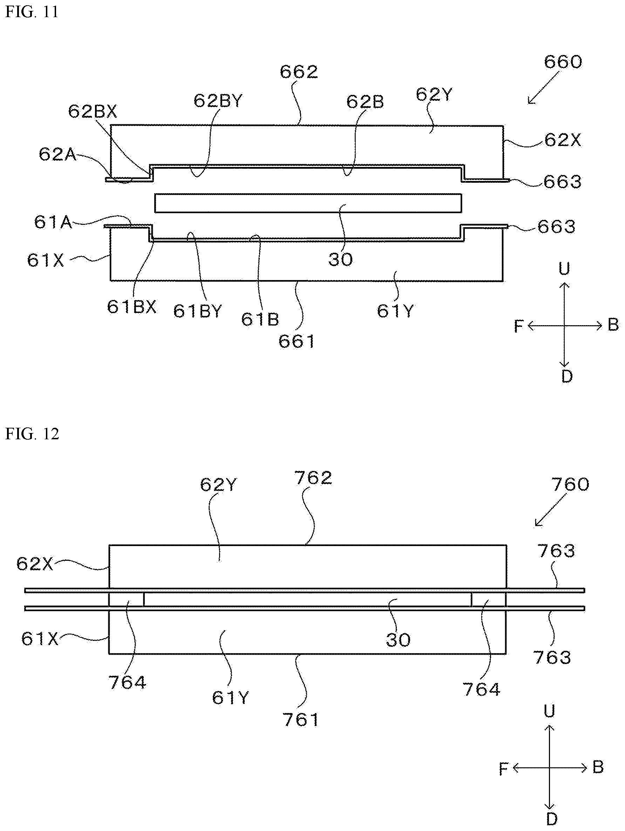

Fig. 11 is an exploded view of the lid 660 in front view. The lid 660 includes a first part 661, a second part 662, and a joining material 663. The joining material 663 joins the electrode terminal 30 formed of a metal and the first part 661 and second part 662 formed of a resin. In the present embodiment, the joining material 663 is, for example, the adhesive film 31 according to the first embodiment. It is preferable that the joining material 663 is joined to a part joining portion 61A and the whole of a concave portion 61B of the first part 661 as shown in Fig. 11. It is preferable that the joining material 663 is joined to a part joining portion 62A and the whole of a concave portion 62B of the second part 662 as shown in Fig. 11. The joining material 663 may be joined only to the concave portion 61B, or only to a bottom surface 61BY of the concave portion 61B. The joining material 563 may be joined only to the concave portion 62B, or only to a bottom surface 62BY of the concave portion 62B. The joining material 663 may be a film. Examples of the film include a coating film that joins the electrode terminal 30 formed of a metal and the first part 661 and second part 662 formed of a resin.

### <6-2. Action and effect of electrical storage device>

In the electrical storage device 10 of the sixth embodiment, the lid 660, which includes the joining material 663, thus eliminates the need to join the adhesive film 31 to the electrode terminal 30. Since the second step as step S12 shown in Fig. 5 or 6 can be omitted, the electrical storage device 10 can be easily manufactured.

### [7. Seventh Embodiment]

An electrical storage device 10 of a seventh embodiment has the same configuration as in the sixth embodiment except that a lid 760 is provided. Hereinafter, the lid 760 of the electrical storage device 10 of the seventh embodiment will be described mainly for portions different from those of the lid 660 of the sixth embodiment.

### <7-1. Configuration of lid>

Fig. 12 is a front view of the lid 760 and an electrode terminal 30. The lid 760 includes a first part 761, a second part 762, and a joining material 763. The shape of the first part 761 is such that the concave portion 61B is omitted from the first part 661 (see Fig. 11), that is, a cuboid. The shape of the second part 762 is such that the concave portion 62B is omitted from the second part 662 (see Fig. 11), that is, a cuboid. The joining material 763 is, for example, the adhesive film 31 according to the first embodiment. The joining material 763 is joined to the upper surface so as to cover the whole of the upper surface of the first part 761. In the example shown in Fig. 12, the joining material 763 protrudes from both end parts of the upper surface of the first part 761. The joining material 763 is joined to the lower surface so as to cover the whole of the lower surface of the second part 762. In the example shown in Fig. 12, the joining material 763 protrudes from both end parts of the lower surface of the second part 762. If small gaps between the first part 761 and the second part 762 are formed at both end parts of the electrode terminal 30, it is preferable the gaps are filled with an adhesive 764 such as a hot-melt adhesive. At least one selected from ultrasonic sealing, high-frequency sealing, heat sealing, and heat plate welding may be performed on the first part 761 and the second part 762 to fill the gaps at both end parts of the electrode terminal 30.

### <7-2. Action and effect of electrical storage device>

In the electrical storage device 10 of the seventh embodiment, the lid 760, which includes the joining material 763, thus eliminates the need to join the adhesive film 31 to the electrode terminal 30. Since the second step as step S12 shown in Fig. 5 or 6 can be omitted, the electrical storage device 10 can be easily manufactured.

### <8. Modifications>

The above-described embodiments are an example of possible forms of a lid, a lid unit, an electrical storage device, a method for manufacturing a lid unit, and a method for manufacturing an electrical storage device according to the present invention, and are not intended to limit the forms thereof. The lid, the lid unit, the electrical storage device, the method for manufacturing a lid unit, and the method for manufacturing an electrical storage device according to the present invention may have a form different from that exemplified in each of the embodiment. An example thereof is a form in which a part of the configuration of any of the embodiments is replaced, changed or omitted, or a form in which a new configuration is added to any of the embodiments. Some examples of modifications of the embodiments will be described below. Note that the above embodiments and the following modifications can be combined as long as they are not technically contradictory.

### <8-1>

In the electrical storage device 10 according to the first embodiment, the configuration of the lid 60 can be arbitrarily changed. For example, at least one of the concave portion 61B of the first part 61 and the concave portion 62B of the second part 62 may be omitted from the lid 60. When the concave portion 61B of the first part 61 or the concave portion 62B of the second part 62 is omitted, it is preferable that the depth of the concave portion 61B or the concave portion 62B is changed to a depth equal to or larger than the overall thickness of the electrode terminal 30. When the concave portion 61B of the first part 61 and the concave portion 62B of the second part 62 are omitted, small gaps between the first part 61 and the second part 62 may be formed at both end parts of the electrode terminal 30. It is preferable the gaps are filled with an adhesive such as a hot-melt adhesive. At least one selected from ultrasonic sealing, high-frequency sealing, heat sealing, and heat plate welding may be performed on the first part 61 and the second part 62 to fill the gaps at both end parts of the electrode terminal 30.

<8-2>

In the electrical storage device 10 according to the second embodiment, the configuration of the lid 260 can be arbitrarily changed. For example, one of the thin portion 261Y and the thin portion 262Y of the lid 260 may be omitted.

### <8-3>

In the electrical storage device 10 of the second embodiment, the first part 261 and the second part 262 of the lid 260 may be integrally formed. In other words, the lid 260 may be formed as one part. According to this modification, it is preferable that a hole extending through the lid 260 instead of the concave portion 61B and the concave portion 62B. After the lid 260 is formed, the electrode terminal 30 is inserted into the hole, and joined to the lid 260 by at least one selected from ultrasonic sealing, high-frequency sealing, heat sealing, heat plate welding, and an adhesive. The lids 60, 360, 460, 560, 660 and 760 of the electrical storage devices 10 of the first embodiment, the third embodiment, the fourth embodiment, the fifth embodiment, the sixth embodiment and the seventh embodiment may be formed as one part.

### <8-4>

In the electrical storage device 10 according to the third embodiment, the configuration of the lid 360 can be arbitrarily changed. For example, the positioning portion 370 may have a picture drawn or attached on the first part 361 and the second part 362. The convex portion 371 may be formed on the part joining portion 62A of the second part 362, and the concave portion 372 may be formed on the part joining portion 61A of the first part 361.

<8-5>

In the electrical storage device 10 of the first embodiment, two electrode terminals 30 may protrude from one of two lids 60. In this modification, a portion of the outer packaging 40 where the other lid 60 is disposed can be sealed by a known method. For example, a portion where the other lid 60 is disposed may be sealed with a known lid formed as one part, or the other lid 60 may be omitted, and the exterior film 50 may be folded to seal the electrode assembly 20. This modification can also be applied to the second to seventh embodiments.

### <8-6>

In electrical storage device 10 of the first embodiment, exterior film 50 may be a laminate (laminate film) including the heat-sealable resin layers 53 on both surfaces of the barrier layer 52. In this modification, the first sealed portion 70 may be formed by heat-sealable resin layers 53 laminated on one side or the other side of the barrier layer 52, or may be formed by heat-sealing the heat-sealable resin layer 53 laminated on one side and the heat-sealable resin layer 53 laminated on the other side of the barrier layer 52. In this modification, the root 70X of the first sealed portion 70 is located on an arbitrary surface of the outer packaging 40. In this modification, it is preferable that the root 70X of the first sealed portion 70 is located on a side 43 which is a boundary between the first surface 41 and the second surface 42. In this modification, the heat-sealable resin layer 53 may be joined to, for example, the barrier layer 52 with an adhesive layer 55 interposed therebetween. This modification can also be applied to the second to seventh embodiments.

### <8-7>

The lids 60, 360, 460, 560, 660 and 760 of the electrical storage devices 10 of the first embodiment, the third embodiment, the fourth embodiment, the fifth embodiment, the sixth embodiment and the seventh embodiment may include a thick portion and a thin portion like the lid 260 of the electrical storage device 10 of the second embodiment. When the lids 60, 260, 360, 460, 560, 660 and 760 have a thick portion and a thin portion, means for joining the thin portion of the lid 60 and the electrode terminal 30 can be arbitrarily selected.

### Reference Signs List

10 Electrical storage device
20 Electrode assembly
30 Electrode terminal
40 Outer packaging
40A Opening
50 Exterior film
60 Lid
61 First part
61B Concave portion
61Y Exposed surface
62 Second part
62B Concave portion
62Y Exposed surface
90 Lid unit
100 Barrier film
260 Lid
261 First part
261X Thick portion
261Y Thin portion
262 Second part
262X Thick portion
262Y Thin portion
360 Lid
361 First part
362 Second part
370 Positioning portion
371 Convex portion
372 Concave portion
460 Lid
461 First part
462 Second part
463 Connecting portion
560 Lid
561 First part
562 Second part
563 Joining material
660 Lid
661 First part
662 Second part
663 Joining material
760 Lid
761 First part
762 Second part
763 Joining material

Further aspects, embodiments and features of the present disclosure are described in the following items:
[Item 1] A lid that is used for an electrical storage device, wherein
   the electrical storage device includes:
   an electrode assembly;
   an electrode terminal electrically connected to the electrode assembly; and
   an exterior film wound around the electrode assembly so as to have an opening, and
   the lid is disposed in the opening, and includes a first part and a second part which sandwich the electrode terminal so as to enable input and output of electrical power through the electrode terminal.
[Item 2] A lid that is used for an electrical storage device, wherein
   the electrical storage device includes:
   an electrode assembly;
   an electrode terminal electrically connected to the electrode assembly; and
   an exterior film wound around the electrode assembly so as to have an opening, and
   the lid is disposed in the opening, and
   the lid and the electrode terminal are joined by at least one selected from ultrasonic sealing, high-frequency sealing, heat sealing, heat plate welding, and an adhesive.
[Item 3] The lid according to item 2, comprising a thick portion joined to the exterior film, and a thin portion connected to the thick portion and joined to the electrode terminal.
[Item 4] A lid that is used for an electrical storage device, wherein
   the electrical storage device includes:
   an electrode assembly;
   an electrode terminal electrically connected to the electrode assembly; and
   an exterior film wound around the electrode assembly so as to have an opening, and
   the lid is disposed in the opening, and includes a thick portion joined to the exterior film, and a thin portion connected to the thick portion and joined to the electrode terminal.
[Item 5] The lid according to any one of items 2 to 4, comprising a first part and a second part which sandwich the electrode terminal so as to enable input and output of electrical power through the electrode terminal.
[Item 6] The lid according to item 1, wherein at least one of the first part and the second part includes a concave portion housing the electrode terminal.
[Item 7] The lid according to item 1, wherein the first part and the second part include a positioning portion for use in sandwiching the electrode terminal.
[Item 8] The lid according to item 7, wherein the positioning portion includes a convex portion formed on one of the first part and the second part, and a concave portion which is formed on the other one of the first part and the second part and in which the convex portion is inserted.
[Item 9] The lid according to item 1, further comprising a connecting portion connecting the first part and the second part,
   wherein one of the first part and the second part is capable of being opened or closed to the other through the connecting portion.
[Item 10] The lid according to item 1, further comprising a joining material which is disposed between the electrode terminal and at least one of the first part and the second part, and is joined to a metal and a resin.
[Item 11] The lid according to item 10, wherein the joining material includes at least one of a film, a resin molded product, and a membrane-like material.
[Item 12] The lid according to item 1, wherein
   the first part and the second part each have an exposed surface exposed to an outside of the electrical storage device,
   a barrier film is joined to at least a part of the exposed surface, and
   the barrier film has at least one of a gas barrier property and a water vapor barrier property.
[Item 13] The lid according to item 1, wherein at least one of the first part and the second part includes a thick portion joined to the exterior film, and a thin portion connected to the thick portion and joined to the electrode terminal.
[Item 14] The lid according to item 1, wherein at least one of the first part and the second part, and the electrode terminal are joined by at least one selected from ultrasonic sealing, high-frequency sealing, heat sealing, heat plate welding, and an adhesive.
[Item 15] A lid unit comprising:
   the lid according to item 1, and
   the electrode terminal sandwiched between the first part and the second part.
[Item 16] A lid unit comprising:
   the lid according to item 2, and
   the electrode terminal joined to the lid.
[Item 17] An electrical storage device comprising the lid according to any one of items 1 to 4.
[Item 18] A method for manufacturing the lid unit according to item 15, the method comprising the steps of:
   sandwiching the electrode terminal between the first part and the second part so as to enable input and output of electrical power through the electrode terminal; and
   joining the first part and the second part to the electrode terminal.
[Item 19] A method for manufacturing the lid unit according to item 16, the method comprising a step of joining the lid and the electrode terminal.
[Item 20] A method for manufacturing an electrical storage device, wherein
   the electrical storage device includes:
   an electrode assembly;
   an electrode terminal electrically connected to the electrode assembly;
   an exterior film wound around the electrode assembly so as to have an opening; and
   a lid disposed in the opening,
   the lid including a first part and a second part,
   the method for manufacturing an electrical storage device comprising the steps of:
      sandwiching the electrode terminal between the first part and the second part so as to enable input and output of electrical power through the electrode terminal; and
      joining the first part and the second part to the electrode terminal.
[Item 21] A method for manufacturing an electrical storage device, wherein
   the electrical storage device includes:
   an electrode assembly;
   an electrode terminal electrically connected to the electrode assembly;
   an exterior film wound around the electrode assembly so as to have an opening; and
   a lid disposed in the opening,
   the method for manufacturing an electrical storage device comprising a step of joining the lid and the electrode terminal by at least one selected from ultrasonic sealing, high-frequency sealing, heat sealing, heat plate welding, and an adhesive.
[Item 22] A method for manufacturing an electrical storage device, wherein
   the electrical storage device includes:
   an electrode assembly;
   an electrode terminal electrically connected to the electrode assembly;
   an exterior film wound around the electrode assembly so as to have an opening; and
   a lid disposed in the opening,
   the lid including a thick portion joined to the exterior film; and a thin portion connected to the thick portion and joined to the electrode terminal,
   the method comprising a step of joining the thin portion and the electrode terminal.

## Claims

1. A lid that is used for an electrical storage device, wherein
the electrical storage device includes:
an electrode assembly;
an electrode terminal electrically connected to the electrode assembly; and
an exterior film wound around the electrode assembly so as to have an opening, and
the lid is disposed in the opening, and includes a thick portion joined to the exterior film, and a thin portion connected to the thick portion and joined to the electrode terminal.

2. The lid according to claim 1 , comprising a first part and a second part which sandwich the electrode terminal so as to enable input and output of electrical power through the electrode terminal.

3. An electrical storage device comprising the lid according to claim 1 or 2.

4. A method for manufacturing an electrical storage device, wherein
the electrical storage device includes:
an electrode assembly;
an electrode terminal electrically connected to the electrode assembly;
an exterior film wound around the electrode assembly so as to have an opening; and
a lid disposed in the opening,
the lid including a thick portion joined to the exterior film; and a thin portion connected to the thick portion and joined to the electrode terminal,
the method comprising a step of joining the thin portion and the electrode terminal.
